# EUROPÄISCHE PATENTSCHRIFT

(11) **EP 1 157 604 B1**
(45) Veröffentlichungstag und Bekanntmachung des Hinweises auf die Patenterteilung: **27.04.2005**
(21) Anmeldenummer: 01250188.8
(22) Anmeldetag: 25.05.2001
(51) Int. Cl.: A01G 1/02

(54) **Vorrichtung und Verfahren zum Züchten und Ernten von Gemüse**
Device and method for cultivating and harvesting vegetables
Dispositif et méthode pour cultiver et récolter des légumes

(30) Priorität: 25.05.2000 DE 10037953; 03.07.2000 DE 20011576 U; 24.02.2001 DE 10109076
(43) Veröffentlichungstag der Anmeldung: 28.11.2001
(73) Patentinhaber: Verhaag, Henricus, 28790 Schwanewede (DE)
(72) Erfinder: Verhaag, Henricus, 28790 Schwanewede (DE)
(74) Vertreter: Effert, Bressel und Kollegen

(56) Entgegenhaltungen:
- DE-A- 1 582 875
- DE-A- 2 015 173
- DE-A- 3 415 202

## Beschreibung

Die Erfindung betrifft eine Vorrichtung und ein Verfahren zur Aufzucht und Ernte von Gemüse, insbesondere Spargel und anderes Bleichgemüse, vgl. z.B. die Drückschrift DE-A-1 582 875.

Im herkömmlichen Spargelanbau wird zu Aufzucht- und Erntezwecken über der Spargelstaude ein Erddamm aufgeworfen, der die nach oben treibenden Spargelstangen/Stängel vom Tageslicht abschirmt (bleicht) und durch den Erddruck die Stängel geschlossen hält. Ähnlich wird bei anderen Bleichgemüsen wie Chicoreè und Sellerie verfahren.
Der Erddamm wird mit einem Spezialpflug aufgeworfen, leicht verdichtet und oben geglättet.
Der Erddamm verursacht bei der Ernte einige Probleme: die Spargelstangen werden erst dann sichtbar, wenn sie bereits die Oberseite des Dammes durchbrochen haben bzw. kurz davor stehen, sie müssen dann sofort geerntet werden, weil bereits nach wenigen Stunden eine erhebliche Qualitätseinbuße durch Verfärbung (wird grün) auftritt.
Die Dämme müssen bei der Ernte der einzelnen Spargelstangen von Hand abgegraben und wieder aufgeschüttet werden, sie müssen täglich, bei warmer Witterung mehrmals täglich, auf erntefähige Spargelstangen hin kontrolliert bzw. durchsucht werden.
Nach dem Ernten muss der Spargel gewaschen werden, um die Erdrückstände zu beseitigen. Zudem wird er auf eine marktfähige-. Länge und auch gerade abgeschnitten werden.
Das Ernten ist beschwerlich und körperlich sehr anstrengend, deshalb sind geeignete und willige Erntehelfer nur schwer zu finden. Beispiel Spargelernte: Bei anhaltend warmer Witterung tritt sehr schnell eine Marktsättigung ein; die erzielten Preise sind dann kaum kostendeckend.
Die Erntekosten sind der größte Einzelkostenfaktor, sie liegen bei bis zu DM 10.000,-je Hektar und Jahr (Stand 1999). Zudem fallen hier noch die Kosten für die Eiswasserkühlung bei der Lagerhaltung an.

Auch in klimatisch sehr günstigen Lagen kommen nur sandige, steinfreie Böden für einen Spargelanbau in Frage, weil Steine oder schwerere Böden den Spargelstangenwuchs durch den Erddamm behindert bzw. unmöglich macht, denn Spargel wächst bei Hindernissen seitlich aus dem Damm oder wird zum Korkenzieher.

Von daher liegt der Erfindung das Problem zugrunde, eine Vorrichtung und ein Verfahren zu entwickeln, die die Nachteile bisheriger Aufzucht von Gemüse, insbesondere des Spargelwachstums zu vermeiden und bisherige Ernteverfahren zu erleichtern, und mit weniger Arbeit, Gerätschaften oder Erntehelfern den Ertrag wesentlich erhöht.

Die Lösung umfasst erfindungsgemäß eine Vorrichtung gemäß dem Anspruch 8 sowie ein entsprechendes Verfahren zur Aufzucht und Ernte von Gemüse, vorzugsweise von Spargel und anderem Bleichgemüse aber auch Pilze gemäß dem Anspruch 1. Das Verfahren und die Vorrichtung sind auch bei anderen Gemüseproduktionen anwendbar, jedoch muss der Dom und seine Füllung dann lichtdurchlässig für grünes oder sonstiges Gemüse sein.

Der Gemüsedom, im folgenden im wesentlichem am Beispiel von Spargel Spargeldom genannt, besteht aus einem Behältnis aus Kunststoff oder einem ähnlich wirkenden Material, das zur Aufnahme einer Füllung geeignet ist und allen Witterungen mindestens eines Jahres standhält. Der Spargeldom kann mit einer Vorrichtung versehen werden, die zum ortsfesten Fixieren im Boden geeignet ist.
Die Füllung des Spargeldoms hat die Eigenschaften von sandigem, schwach humosem Boden, der leicht angedrückt ist. Sie kann aus einem gefestigten Schaum, aus mit Latex versehenen Papierflocken oder anderen Materialien wie Stroh, gepresst oder lose in Netzen gehalten sein, die die Eigenschaften des Erdhügels simulieren können.

Diese Füllung muss jährlich erneuert werden, indem sie als Einheit oder in losem Zustand, der sich im Spargeldom festigt, in den Spargeldom eingeführt bzw. eingefüllt wird. Der Spargeldom ersetzt den Erddamm, der beim Spargelanbau über der Spargeistaude aufgeschüttet werden muss, um die Spargelstangen zu bleichen und die Spitzen in einem geschlossenen Zustand zu halten. Der fest auf dem Boden aufstehende Spargeldom schließt das Innere lichtdicht ab.
Die Spargelstange dringt durch Längenwachstum in die Unterseite der Füllung ein. Die Füllung umhüllt die Spargelstange wie Erdreich. Der Formgebung des Spargeldomes sind keine Grenzen gesetzt, er sollte jedoch so sein, dass sich auch mehr als zwei Spargeldome in Reihe fest verbinden lassen. Die Oberseite ist geschlossen, die Unterseite ist offen. Die Spargeldome können auch zu mehreren zusammen gefasst werden, so dass die Abdeckung für mehrere bis zu beliebig vielen Spargelstauden möglich ist. Der Spargeldom sollte sich nach der Ernte ineinander Stapeln lassen, damit wenig Lageraum benötigt wird. Zudem ist er im gestapelten Zustand widerstandsfähiger gegen mechanische Einflüsse. Es kann eine Griffmulde bzw. Hebevorrichtung angebracht werden, sie kann bei der Ernte das Hochheben und das Wiederaufsetzen des Spargeldoms erleichtern. So sind Aufsatzhilfen beliebiger Art möglich. Die Füllung kann aus umweltfreundlichen Materialien hergestellt werden und ist dann an Ort und Stelle weitestgehend kompostierbar. Entsorgungsprobleme entstünden dann nicht. Nach dem Pflanzen der Spargelstaude wurde bisher vor der Ernte in Damm in ein oder zwei Arbeitsgängen aufgeschüttet und in der Regel eine Folie darüber ausgelegt. Hier ändert sich durch die Einsparung der Aufschüttung des Dammes das Verfahren erheblich, da Material-, Lohn- und Zeit eingespart werden.

Sobald der Spargelkopf an die Folie stößt, wird die Folie um die Staude ausgeschnitten und der Spargeldom aufgesetzt und fest fixiert. Ab hier ändert sich das Ernteverfahren grundlegend. Der Erntehelfer sucht nun nicht mit den Fingern den Damm nach erntereifen Spargel ab, er hebt einfach einen oder mehrere Spargeldome an und die Größe der einzelnen Spargelstangen ist sichtbar. Hier kann er den Wuchs auf dem Spargeldom kennzeichnen, sodass nach dem ersten Nachsehen kein Suchen mehr notwendig ist. Nach jeder von außen ungefähr erkenntlichen Ernte kann neu gezielt jede Staude gekennzeichnet werden, womit der so ausgewählte Spargeldom nur noch für das Schneiden angehoben werden muss.

Die Zeitersparnis wird mehr als 70% betragen. Bei diesem Ernteverfahren ist das Ernten mit einem Erntewagen möglich, der das Sichten der Erntezeiten aus den Markierungen und das Ernten vom Wagen aus ermöglicht.

Dadurch, dass die Erde aus welcher der Damm nach der herkömmlichen Methode aufgeschüttet wurde, durch einen in den wesentlichen Eigenschaften gleichwertigen Stoff ersetzt wird, werden sehr viele Probleme nachhaltig gelöst:
Die Ernte kann zum frühestmöglichen Zeitpunkt durchgeführt werden, weil mit einer einfachen Handreichung die erzielte Länge aller Spargelstangen festgestellt werden kann.

Alle erntefähigen Spargelstangen, die über der Staude 16 bzw. 26 cm erreicht haben, können in einem Arbeitsgang geerntet und auf die Verkaufslänge gerade abgeschnitten werden.
Selbst längere Stangen werden auf das Idealmaß abgeschnitten - nicht mehr gestochen, wobei der Rest noch als Spargelstücke Verwendung finden kann.
Spargelbruch, durch verfehltes oder fehlerhaftes Abstechen wird beim Schneiden vermieden.
Da der Spargel oberhalb des Erdreiches wächst, ist ein Waschen nicht mehr nötig. Zudem ist er bereits auf eine marktfähige Länge und auch gerade abgeschnitten.
Die Erwärmung der Füllung des Doms im Frühjahr setzt wesentlich früher ein, weil weniger Erde erwärmt werden muss, wodurch auch teure Geräte entfallen. Der Spargeldom arbeitet wie ein Gewächshaus und speichert Wärme, die das Wachstum nochmals beschleunigt.

Die Frühernte wird wesentlich vorverlegt.
Der Spargeldom schützt den Spargel vor Nacht- und Bodenfrost.
Der Erntezeitpunkt kann, je nach Marktlage und Personalplanung, um einige Tage verschoben werden, hierdurch entfallen Kosten für Kühlung und Lagerung.
Es sind beim Erntevorgang nur noch geringfügige Erdarbeiten notwendig. Die Anzahl der Erntedurchgänge wird reduziert oder mindestens halbiert, deshalb entstehen geringere Bodendruckschäden.
Auch bisher nicht geeignete Böden in klimatisch günstigen Regionen können für den Gemüseanbau, insbesondere den Spargelanbau genutzt werden.
Das aufwendige Aufpflügen und Einebnen der Dämme entfällt. Die beim Einebnen der Dämme verursachten Beschädigungen und Abreißen der Spargelstangen findet nicht mehr statt, deshalb können die Spargelstangen ungehindert weiterwachsen und die Vegetationsperiode wird deutlich verlängert. Das Aufbringen einer Antikondensfolie ist wesentlich leichter und es ist eine geringere Bahnenbreite erforderlich. Durch das Fehlen der Erddämme kann die Entfernung der Spargelreihen bis zu 50% verringert werden, was den Ertrag pro Hektar verdoppelt. Hinzu kommt das Fehlen von Spargelbruch von 25%, der bei einer Kostenersparnis von ca. 50% minus der Kosten der Spargeldome zu einer Gewinnerhöhung von ca. 800% führt.

Auf die Wirbelsäulenschäden, die beim Spargelstechen durch die Haltung entstanden und bei der Verwendung des Spargeldomes nicht vorkommen muss hier nicht eingegangen werden, die Erwähnung soll nur den Vorteil für den Menschen und den volkswirtschaftlichen Vorteil anzeigen. Zudem könnte der Spargel erheblich günstiger auf den Markt gelangen und breiteren Schichten zugänglicher werden.

In einer speziellen Ausführungsform wird eine sinnvolle Temperaturregelung im Dom vorgenommen, um Wachstumsstörungen des Spargels entgegenzuwirken. Wenn eine Temperatur von 30° C wesentlich überschritten oder die Mindesttemperatur von ca. 10° C unterschritten wird, führt dies zu Wachstumsstockungen, die den Ertrag erheblich mindern. Daher soll eine Temperaturregulierung bei entsprechender Witterung im Spargeldom das Wachstum begünstigende Temperaturen sicherstellen, aber Lichteinfall vermieden werden, weil sich die Spargelstangen unter Lichteinwirkung verfärben und infolgedessen Qualitätseinbuße auftreten.

Es werden daher erfindungsgemäß seitlich im Spargeldom Öffnungen angebracht. Abmessungen und Form der Öffnung richten sich jeweils nach der Größe und Form des Doms. Es können die Öffnungen so angeordnet werden, dass eine Querlüftung möglich wird. An der Dominnenseite werden die Öffnungen mit gegeneinander versetzten Larnellen oder Schotten versehen, die eine ungehinderte Durchströmung der Luft zulassen, das Licht auf Grund des Anstellwinkeis, der versetzten Anordnung und der Farbgebung nicht durchlassen, und als Lichtfalle wirken.

Die Lüftungsöffnungen können mit Regelklappen versehen werden, die temperaturabhängig die Öffnungen freigeben oder verschließen.
Das Öffnen und Schließen der Lüftungsöffnungen kann beispielsweise sowohl manuell als auch mechanisch, elektromagnetisch wie auch elektronisch geschehen.

Ein erfindungsgemäßer Erntewagen mit Spargeldom-Heber soll folgende Aufgaben erledigen, dargestellt wieder am Beispiel Spargelernte:
1 .den Spargeldom zu Erntezwecken anheben,
2. in der angehobenen Lage kippen und arretieren und
3. nach dem Erntevorgang wieder genau in die Ausgangslage bringen,
4. eine Vorsortierungseinrichtung haben,
5. den Transport des Erntegutes ermöglichen,
6. erforderlichenfalls die Domschattierung anbringen bzw. wieder aufrollen und
7. die Spargeldome verlegen und wiederaufnehmen,
8. eine witterungs- und tageslichtunabhängige Ernte ermöglichen.

Zu Beginn der Erntesaison kann der Erntewagen zum genauen Verlegen der Dome über den Spargelstauden eingesetzt werden. Zu diesem Zweck können Markierungen und andere einfache optische Hilfen oder auch Positionier- und Ortungssysteme am Erntewagen angebracht werden, die zusammen mit Feldmarkierungen für die Dome das Auffinden der oberirdisch nicht sichtbaren Spargelstauden- Reihen ermöglichen und die Verlegearbeit wesentlich erleichtern.

Am Ende der Erntesaison, vorzugsweise beim letzten Erntedurchgang, kann der Erntewagen als Dom-Aufnahme- und Sammelgerät eingesetzt werden.

Der Heber kann über die Spargeldome mittels lenkbaren Rädern weiter bewegt, soweit er nicht auf Schienen geführt wird, und so von Dom zu Dom leicht manuell oder durch den Einsatz von Zugmaschinen gezogen oder geschoben werden. Die Radlenkung wird mit Hilfe von Tastern, die entlang der Dome gleiten und mit dem Rad verbunden sind, erleichtert. Griffe am Rahmen und am Spannhebei erleichtern die Handhabung.

Der Heber besteht im wesentlichen aus zwei Teilen.
Dem festen Rahmen mit Rädern und der beweglichen Hebe-Kippvorrichtung.
Der Spargeldom-Heber wird über dem anzuhebenden Dom in Position gebracht und durch Feststellen der Räder arretiert.

Die Hebevorrichtung wird abgesenkt, der Bügel wird um den Spargeldom gelegt. Mit dem Spannhebel wird der Bügel fest um den Spargeldom gespannt und danach so weit angehoben, bis die Kippachse in der dafür vorgesehenen Kippmulde abgelegt werden kann. Mit dem Spannhebel wird der Dom seitlich gekippt und in dieser Stellung arretiert. Hierdurch wird das Blickfeld auf den zu erntenden Spargel freigegeben, weil der Spargeldom ohne Erddämme arbeitet und es kann mühelos geerntet werden. Nach dem Ernten erfolgt die Absenkung in umgekehrter Folge.
Durch die Führung der Kippachse und des Bügels in den Schienen ist zu jeder Zeit ein punktgenaues Absetzen des Domes in die Ausgangsposition über den Spargelstauden gewährleistet.
Zum Weitertransport des Spargeldom - Hebers wird der Bügel vom Spargeldom gelöst, angehoben und die Kippachse wieder in der Auflagemulde abgelegt.
Die Hebevorrichtung ist mit einer Zugfeder, Gummizug oder ähnlichem versehen, welches das Gewicht des Spargeldoms ausgleicht und so verhindert, dass der Spargeldom versehentlich abstürzen kann und die Spargelstangen beschädigt. Zudem wird der Hebevorgang wesentlich erleichtert. Die Kraftübertragung beim Anheben und Absenken kann mittels dem Fachmann geläufiger Hebel, Zugfedern, Hydraulik oder Pneumatik erfolgen.

Die Führungslaschen, die in die Führungsschienen am Rahmen greifen, bewirken ein senkrechtes Anheben und ein genaues Absetzen des Domes. Hierdurch wird eine Beschädigung der noch nicht geernteten Spargelstangen vermieden.

Auf dem Spargeldom-Heber befindet sich ein Rahmen zur Aufnahme von Behältern für das Erntegut und die benötigten Erntewerkzeuge wie Spargeischere usw. Die Fläche ist ausreichend für 3 - 4 handelsübliche Behälter oder Gebinde zur Aufnahme der geernteten Spargelstangen.

In der Regel wird Spargel in 3 Güteklassen sortiert und vermerktet, so dass bei dieser Anzahl Behälter ein weiteres Sammeln und Umladen der Spargelstangen nicht mehr erforderlich ist. Somit ist das Erntegut sofort, ohne weitere Zwischenbearbeitung, vermarktungsfähig.

Zum Schutz gegen Witterungseinflüsse kann ein entsprechender Wetterschutz angebracht werden, der sowohl den Ernter als auch das Erntegut vor Regen und Sonneneinstrahlung schützt. Eine witterungsunabhängige Ernte ist deshalb möglich. Eine Beleuchtung zur Ausleuchten des Arbeitsfeldes kann am Rahmen angebracht werden. Eine tageslichtunabhängige Ernte wird hierdurch ermöglicht.

Zur besseren Temperatursteuerung wird über den Spargeldomreihen bei sehr starker Sonneneinstrahlung eine Schattierung angebracht. Dies kann eine Folie oder auch ein Gewebe sein.
Am Erntewagen können Rollen angebracht werden, die die Schatten spendende Folie rollend aufnehmen und während der Fortbewegung abrollen, damit die Schattierung über die Dome gezogen wird. Die Schattierung wird bei entsprechender kühlerer Witterung wieder während des Erntevorgangs aufgerollt.

In Kombination mit einem derartigen Erntewagen kann der Schneidvorgang bei der Spargelernte manuell erfolgen, z.B. mit einer Spargelschere wie in der DE-Patentanmeldung 100 62 830.3 dargestellt.
Bei einer derartigen Spargelschere wird der Spargel durch eine Spann- oder Klemmvorrichtung gehalten und dann kurz über dem Boden abgeschnitten in der gewünschten Höhe.

Alternativ kann auch dieser Vorgang weiter automatisiert werden mit einer entsprechenden Erntemaschine. Diese kann in Kombination mit dem Erntewagen arbeiten für Dome der beschriebenen Art oder solchen für andere Gemüsearten, z.B. für Pilze wie Champignons.

Am Beispiel von Spargel soll auch hier eine automatische Spargel-Erntemaschine beschrieben werden. Sie besteht aus Spargeldom-Hebern, die die Spargeldome zur Ernte anheben und hernach wieder präzise absetzen kann, einem Erfassungs- und / oder Steuergerät zur Lenkung einer Schneidevorrichtung, insbesondere einer Schneidevorrichtung zur Trennung der Spargelstangen von der Staude, Greifer oder vorzugsweise rotierende Bürsten zum Transport der abgeschnittenen Spargelstangen auf ein Förderband oder Fördervorrichtung und Behältern zur Aufnahme des Erntegutes was vorzugsweise schon durch Messgitter oder andere Sortierer die nach Größe, Gewicht, Breite, Höhe oder Farbe und ähnliches sortiert werden kann.

Die Schneidevorrichtung besteht beispielsweise aus einem unteren feststehendem Kammmesser, dessen einzelne Zähne den Durchmesser eines reifen Spargels übertreffen und der im Kammbett abgerundet ist und einem oberen hin- und her beweglichen Kammmesser in gleicher Ausführung, dass mit den Bewegungen den Spargel, der in die Karnmzähne eingedrungen ist, sauber abschneidet. Andere beispielsweise rotierende Schneidmesser können aber in Verbindung mit anderen angepassten Steuerungen angewendet werden.
Diese Erntemaschine kann selbstfahrend sein oder auch von einer Zugmaschine bewegt werden. Die Erntemaschine kann durch Einbau von Sensoren, die den Standort des Spargeldoms erfassen, auch vollautomatisch arbeiten, sodass ein Fahrer des Dom-Hebers nicht erforderlich ist.
Um die Erntemaschine exakt zwischen den Spargelstauden zu bewegen, kann dieser vorzugsweise auf Schienen oder schienenähnlichen Rollenführungen, die zwischen den Staudenreihen verlegt werden können, zum Einsatz kommen. Diese Schienen können beidseitig der Staudenreihen so verlegt werden, dass die Spargel-Erntemaschine über die mit Spargeldomen abgedeckten Staudenreihen verfahrbar ist.
Spargelerntemaschinen sind nicht bekannt, das sich diese Maschine nur einsetzen lässt, wenn Spargel unter einem Spargeldom gezogen wird. Diese Spargeldome werden hier erstmals beschrieben.
Die Spargeldome sind im Test und werden voraussichtlich den Spargelanbau ändern; eine automatische Spargelernte ist nun möglich.

Die Vorteile sind die hohe Erntekapazität mit wenig Personal. Durch die bodennahe Vollernte auch kleinster Spargel wird nur ein- bis zweimal pro Woche geerntet. Der Fortfall der hohen Erntekosten und eine hohe Erntegeschwindigkeit sind wirtschaftlich beachtlich.

Die Spargel-Erntemaschine kann überall vorzugsweise dort zum Einsatz kommen, wo die Spargelernte aus Spargeldomen erfolgt und der Spargel überwiegend für die Verarbeitung in Konserven verwendet wird.

Zusammenfassend kann gesagt werden ,dass die automatische Spargel-Erntemaschine dadurch gekennzeichnet ist, dass
- sie als Vollerntemaschine selbsttätig den Spargeldom zur Ernte anhebt
- sie nach Anheben des Spargeldoms den Spargel voll erntet
- sie den Spargel zu den Sammelbehältern transportiert
- sie die Spargel nach Größe in die Sammelbehälter sortiert
- sie auf Schienen bewegt werden kann
- sie mit entsprechenden Sensoren ausgestattet auch ohne Steuerpersonal ernten kann
- gleichzeitig eine oder mehrere Spargelreihen ernten kann.

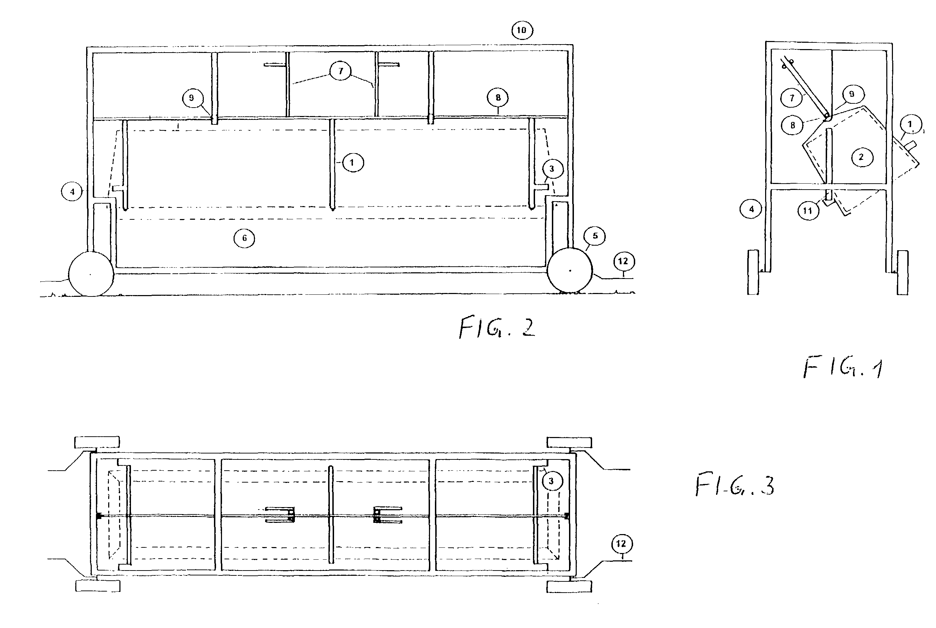

Zwei Ausführungsbeispiele in der der Zeichnung dargestellt. Es zeigen
- Fig. 1- 3: einen Erntewagen in Kippposition mit Spargeldom, in Ausgangspositon vor Aufnahme des Spargeldoms vom Beet in Seitenansicht und Draufsicht;
- Fig. 4: einen Spargeldom.

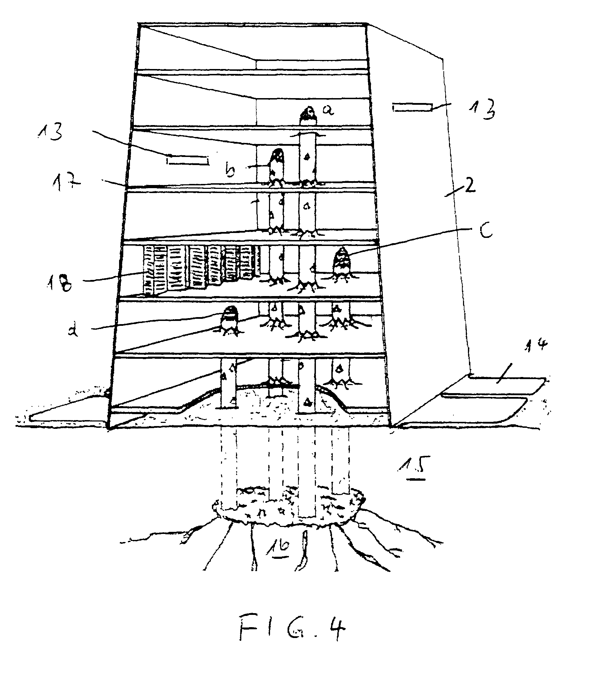

Der Erntewagen in Vorderansicht hält einen Spargeldom 2 (Fig. 4) mittels Klemmbügel 1 in gekippter Position um Kippachse und Spannachse 8 in einer hakenförmigen Kippmulde 9 des Rahmens 4, nachdem er ihn mit Spannhebeln 7 zunächst vertikal vom Beet abgehoben hat aus einer Position 6, die in Fig. 2 dargestellt ist. In der Kippposition, die mit Hilfe von Führungsschienen 11 und Führungslaschen 3 arretierbar ist, kann von links dann der Erntehelfer mit der Schere den Spargel ernten. Der Dom hängt dabei in einem Wagen mit Rahmengestell 4, der auf Rädern 5 mit Hilfe von Tastern 12 durch das Gemüsefeld manuell oder automatisch bewegbar ist. Am Rahmen kann eine nicht dargestellte automatische Scheid- und Steuereinrichtung sowie eine Förder- und Sortiervorrichtung angekoppelt sein sowie eine nicht dargestellte Rolle für das Aufnehmen und Abrollen einer Folie zur Beschattung von Spargeldomen angeordnet sein.
Auf dem Rahmen ist eine Abstellfläche 10 für Erntegut-Behälter vorgesehen. ,
Fig. 4 zeigt in aufgeschnittener Seiten-Perspektive einen Spargeldom 2 mit Belüftungsöffnungen 13, die aus zwei gegeneinander gerichteten ausgestanzten Laschen bestehen und nach Art einer Lammelle die Öffnung beschatten, aber Luft in den Dom lassen, wenn sie nicht in Richtung der Wand des Doms gestellt sind. Die Lachen 14 dienen der Befestigung am Boden des Beetes 15 in dem die Staude oder Wurzel 16 des Gemüse liegt. Der Dom 2 besteht aus der äußeren Hülle mit Füllung 18 beispielsweise aus Stroh und gegebenenfalls ausgesteift mit Papieretagen 17.
Der Spargel a, b, c, d wächst durch die Füllung und wird nach Abheben des Domes komplett geerntet oder in mehreren Zyklen, beispielsweise zunächst a und, dann c und d. Dazu ist es wichtig, dass der Dom wieder genau in seine Position gesetzt wird, wenn nur a und b geerntet wurden, sodass der Spargel c und d nicht beschädigt wird.
Die Laschen 14 können mit weiteren Domen gekoppelt sein oder mit einer Nadel im Beet befestigt werden.

## Patentansprüche

1. Verfahren zur Aufzucht und Ernte von Gemüse, insbesondere Spargel und anderes Bleichgemüse wobei zum gesicherten und schnellen Wachstum des Gemüse ein künstlicher, auf ein Gemüsebeet (15) platzierbarer Dom (2) aus einer äußeren eigenstabilen Hülle verwendet wird, **dadurch gekennzeichnet, daß** in den Dom eine Füllung (18) eingebracht wird, die die wachstumsfördernden Eigenschaften von Erdreich besitzt und Wärme speichern kann.

2. Verfahren nach Anspruch 1, **dadurch gekennzeichnet, dass** ein oder mehrere Dome (2) zu einer bewegbaren Einheit zusammengefügt werden.

3. Verfahren nach Anspruch 1 oder 2, **dadurch gekennzeichnet, dass** ein oder mehrere Dome (2) durch ein oder mehrere Führungen (3, 11) im Erdreich verankert werden, um so bewegt werden zu können, dass sie nach Abheben bei der Ernte des Gemüse an den vorherigen Platz abgesenkt werden können.

4. Verfahren nach einem der Ansprüche 1 bis 3 **dadurch gekennzeichnet, dass** die Dome (2) zur Gemüseernte beim Anheben vom oder Absenken auf das Gemüsebeet (15) mittels Griffmulden (1) oder anlegbaren Greifeinrichtungen (7, 8, 9) bewegbar sind.

5. Verfahren nach einem der vorhergehenden Ansprüche, **dadurch gekennzeichnet, dass** nach Anheben der Dome (2) das Gemüse an einer oder mehreren Stauden (16) ebenerdig offen zugänglich ist und alle an einem Erntetag reiten Spargel zu einem Zeitpunkt geerntet worden können.

6. Verfahren nach einem der vorhergehenden Ansprüche, **dadurch gekennzeichnet, dass** die Dome (2) zur selektiven Wärmespeicherung in Abhängigkeit von der Außentemperatur belüftet werden.

7. Verfahren nach einem der vorhergehenden Ansprüche, **dadurch gekennzeichnet, dass** die Dome (2) vor der Ernte mit einer Folie gegen Lichteinfall abgedeckt werden.

8. Vorrichtung zur Aufzucht und Ernte von Gemüse, insbesondere Spargel und anderes Bleichgemüse nach einem der Verfahren nach den Ansprüchen 1 - 7, mit einem im wesentlichen allseits geschlossenen, bodenlosen, bewegbaren Dom (2) nach Art einer eigenstabilen Haube zur Abdeckung eines Gemüsebeetes (15), **gekennzeichnet durch** eine darin enthaltenen Füllung (18).

9. Vorrichtung nach Anspruch 8, **dadurch gekennzeichnet, dass** die Füllung (18) aus in Abständen geschichteten oder in einem Netz gehaltenen Material, vorzugsweise Papier, Schaum, Stroh, mit wärmespeichernden und im wesentlichen lichtundurchlässigen Eigenschaften besteht.

10. Vorrichtung nach Anspruch 8 oder 9, **dadurch gekennzeichnet, dass** der Dom (2) allein oder gemeinsam mit benachbarten Domen mit Einrichtungen (14) zur temporären Befestigung auf dem Gemüsebeet (15) versehen ist.

11. Vorrichtung nach einem der Ansprüche 8 - 10, **dadurch gekennzeichnet, dass** am Dom (2) verstellbare Belüftungseinrichtungen (13) angeordnet sind.

12. Vorrichtung nach einem der Ansprüche 8 - 11, **dadurch gekennzeichnet, dass** am Dom (2) Einrichtungen (7, 8, 9) zum zielgerichteten Abheben und Aufsetzen auf das Gemüsebeet angeordnet sind.

13. Vorrichtung nach Anspruch 12, **gekennzeichnet durch** einen über dem Gemüsebeet (15) beweglich positionierbaren Wagen, der über Greifeinrichtungen (7, 8, 9) verfügt, mit denen der Dom (2) an seinen Griffmulde (1) zum zielgerichteten Abheben und Aufsetzen zielgerichtet vertikal abnehmbar und aufsetzbar ist.

14. Vorrichtung nach Anspruch 13, **dadurch gekennzeichnet, dass** die Vorrichtung als automatische Erntemaschine zum Bewegen der Dome (2) ausgebildet ist und eine Schneide- und Fördervorrichtung für das Gemüse hat.

15. Vorrichtung nach Anspruch 13 oder 14, **dadurch gekennzeichnet, dass** die Vorrichtung eine Erfassungseinrichtung für wenigstens eines von Lage des Gemüses, des Domes, der Schneideeinrichtung und eine Steuereinrichtung für die Schneideeinrichtung für das Gemüse hat.

16. Vorrichtung nach Anspruch 13, 14 oder 15 **dadurch gekennzeichnet, dass** die Vorrichtung eine Sortiereinrichtung für das Gemüse nach mindestens einem der Parameter des Gemüse Höhe, Breite, Gewicht, Farbe aufweist.

## Claims

1. Method for cultivating and harvesting vegetables, in particular asparagus and other blanched vegetables, a synthetic dome (2), which can be placed on a vegetable bed (15) and is made of an external, inherently stable covering, being used for secure and rapid growth of the vegetables, **characterised in that** a filling (18) which has the growth-promoting properties of soil and can store heat is introduced into the dome.

2. Method according to claim 1, **characterised in that** one or more domes (2) can be assembled into one moveable unit.

3. Method according to claim 1 or 2, **characterised in that** one or more domes (2) are anchored in the soil by means of one or more guides (3, 11), in order to be able to be moved such that, after being lifted off during harvesting of the vegetables, they can be lowered onto the previous position.

4. Method according to one of the claims 1 to 3, **characterised in that** the domes (2) for vegetable harvesting can be moved by means of recessed grips (1) or attachable gripping mechanisms (7, 8, 9) when lifting or lowering onto the vegetable bed (18).

5. Method according to one of the preceding claims, **characterised in that**, after lifting the domes (2), the vegetables are freely accessible at ground level at one or more plants (16) and all the asparagus which is ripe on one day of harvesting can be harvested at the one time.

6. Method according to one of the preceding claims, **characterised in that** the domes (2) are ventilated, dependent upon the outside temperature, for selective heat storage.

7. Method according to one of the preceding claims, **characterised in that**, before harvesting, the domes (2) are covered with a film against impingement of light.

8. Device for cultivating and harvesting vegetables, in particular asparagus and other blanched vegetables, according to one of the methods according to claims 1 - 7, having a dome (2), which is substantially closed on all sides, has no base and is moveable, said dome being of the inherently stable hood type for covering a vegetable bed, **characterised by** a filling (18) contained therein.

9. Device according to claim 8, **characterised in that** the filling (18) comprises material which is layered at spacings or held in a net, preferably paper, foam, straw, having heat storing and substantially light-impermeable properties.

10. Device according to claim 8 or 9, **characterised in that** the dome (2), on its own or together with adjacent domes, is provided with mechanisms (14) for temporary mounting on the vegetable bed (15).

11. Device according to one of the claims 8 - 10, **characterised in that** displaceable ventilation mechanisms (13) are disposed on the dome (2).

12. Device according to one of the claims 8 - 11, **characterised in that** mechanisms (7, 8, 9) for targeted lifting off and putting down on the vegetable bed are disposed on the dome (2).

13. Device according to claim 12, **characterised by** a wagon, which can be moveably positioned over the vegetable bed (15) and has gripping mechanisms (7, 8, 9) with which the dome (2), by its recessed grip, can be vertically lifted off and put down for targeted lifting off and putting down.

14. Device according to claim 13, **characterised in that** the device is configured as an automatic harvesting machine for moving the domes (2) and has a cutting and conveying device for the vegetables.

15. Device according to claim 13 or 14, **characterised in that** the device has a detection mechanism for at least one position of the vegetables, of the dome, of the cutting mechanism and has a control mechanism for the cutting mechanism for the vegetables.

16. Device according to claim 13, 14 or 15, **characterised in that** the device has a sorting mechanism for the vegetables according to at least one of the parameters of the vegetables, height, breadth, weight, colour.

## Revendications

1. Procédé pour la culture et la récolte de légumes, en particulier d'asperges et d'autres légumes à l'aspect blanc, sachant qu'une coupole artificielle (2) composée d'une enveloppe externe ayant une stabilité propre et pouvant être placée sur une plate-bande de légumes (15) est utilisée pour obtenir une croissance rapide et sûre des légumes, **caractérisé en ce qu'**un remplissage (18) est introduit dans la coupole, qui possède les propriétés de la terre favorisant la croissance et qui peut emmagasiner de la chaleur.

2. Procédé selon la revendication 1, **caractérisé en ce que** une ou plusieurs coupoles (2) sont assemblées à une unité déplaçable.

3. Procédé selon la revendication 1 ou 2, **caractérisé en ce que** une ou plusieurs coupoles (2) sont ancrées dans la terre par l'intermédiaire d'un ou de plusieurs guidages (3, 11) afin de pouvoir être déplacées de telle sorte qu'elles puissent être abaissées à la place précédente après avoir été enlevées pour récolter les légumes.

4. Procédé selon l'une des revendications 1 à 3, **caractérisé en ce que** les coupoles (2) peuvent être déplacées pour la récolte des légumes, en les soulevant ou en les abaissant sur la plate-bande de légumes (15) au moyen de poignées encastrées (1) ou de dispositifs de manipulation (7, 8, 9) pouvant être ajoutés.

5. Procédé selon l'une des revendications précédentes, **caractérisé en ce que**, lorsque les coupoles (2) sont soulevées, les légumes sont accessibles de plein pied au niveau d'une ou de plusieurs plantes (16) et **en ce que** toutes les asperges prêtes à être récoltées puissent l'être à un moment donné.

6. Procédé selon l'une des revendications précédentes, **caractérisé en ce que** les coupoles (2) sont ventilées pour emmagasiner de la chaleur de manière sélective en fonction de la température extérieure.

7. Procédé selon l'une des revendications précédentes, **caractérisé en ce que** les coupoles (2) sont recouvertes avant la récolte d'un film contre l'incidence de la lumière.

8. Dispositif pour la culture et la récolte de légumes, en particulier d'asperges et d'autres légumes à l'aspect blanc selon l'un des procédés conformément aux revendications 1 à 7, avec une coupole (2) sensiblement fermée de toutes parts, sans fond et déplaçable, à la manière d'un dôme ayant une stabilité propre afin de couvrir une plate-bande de légumes, **caractérisé par** un remplissage contenu à l'intérieur (18).

9. Dispositif selon la revendication 8, **caractérisé en ce que** le remplissage (18) se compose de matières disposées par couches à distances égales ou maintenues dans un filet, de préférence du papier, de la mousse, de la paille, capables d'emmagasiner de la chaleur et sensiblement opaques.

10. Dispositif selon la revendication 8 ou 9, **caractérisé en ce que** la coupole (2) seule ou conjointement avec des coupoles contiguës est pourvue de dispositifs (14) pour être temporairement fixée sur la plate-bande de légumes (15).

11. Dispositif selon l'une des revendications 8 à 10, **caractérisé en ce que** des dispositifs de ventilation (16) réglables sont disposés sur la coupole (2).

12. Dispositif selon l'une des revendications 8 à 11, **caractérisé en ce que** des dispositifs (7, 8, 9) sont disposés sur la coupole (2), destinés à l'enlever et à la poser précisément sur la plate-bande de légumes.

13. Dispositif selon la revendication 12, **caractérisé par** un chariot pouvant être positionné de manière mobile au-dessus de la plate-bande de légumes (15) qui dispose de dispositifs de manipulation (7, 8, 9) avec lesquels la coupole (2) peut être précisément enlevée et posée verticalement par l'intermédiaire de sa poignée encastrée (1) afin d'être précisément enlevée et posée.

14. Dispositif selon la revendication 13, **caractérisé en ce que** le dispositif est conçu comme une machine automatique de récolte pour déplacer les coupoles (2) et possède un dispositif de coupe et un convoyeur pour les légumes.

15. Dispositif selon la revendication 13 ou 14, **caractérisé en ce que** le dispositif possède un dispositif de détection pour au moins une des positions des légumes, de la coupole, du dispositif de coupe, et d'un dispositif de pilotage pour le dispositif de coupe des légumes.

16. Dispositif selon la revendication 13, 14 ou 15, **caractérisé en ce que** le dispositif comporte un dispositif de triage pour les légumes selon au moins un des paramètres de la hauteur, de la largeur, du poids ou de la couleur des légumes.
